# EUROPÄISCHE PATENTANMELDUNG

(11) **EP 0 957 640 A2**
(43) Veröffentlichungstag der Anmeldung: **17.11.1999**
(21) Anmeldenummer: 99108992.1
(22) Anmeldetag: 06.05.1999
(51) Int. Cl.: H04N 7/24

(54) **Verfahren und Vorrichtung zur Auswertung eines digitalen Datenstroms**

(30) Priorität: 09.05.1998 DE 19820936
(71) Anmelder: GRUNDIG Aktiengesellschaft, 90762 Fürth (DE)
(72) Erfinder: Horn, Bernhard, 90762 Fürth (DE)

(57) **Zusammenfassung**

Die Erfindung betrifft ein Verfahren zur Auswertung eines digitalen Datenstroms, in welchem die Daten paketweise übertragen werden, jedes Paket ein Synchronbyte aufweist und in den Paketen Bitpositionen vorgegeben sind, an denen Kennbits übertragen werden. Die an den vorgegebenen Bitpositionen einen ersten Pakets übertragenen Kennbits werden aus dem Datenstrom separiert und zwischengespeichert. Die an den vorgegebenen Bitpositionen eines nachfolgenden Paketes übertragenen Kennbits werden ebenfalls aus dem Datenstrom separiert und mit den zwischengespeicherten Kennbits verglichen. Stimmen die miteinander verglichenen Kennbits nicht überein, wird ein Indikatorsignal erzeugt, welches die Ungleichheit der miteinander verglichenen Kennbits signalisiert.

## Beschreibung

Die Erfindung betrifft ein Verfahren zur Auswertung eines digitalen Datenstromes, in welchem die Daten paketweise übertragen werden, jedes Paket ein Synchronbyte aufweist und in den Paketen Bitpositionen vorgegeben sind, an denen Kennbits übertragen werden. Weiterhin betrifft die Erfindung eine Vorrichtung zur Auswertung eines digitalen Datenstromes.

Aus dem Buch 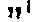 Digitale Fernsehtechnik, Datenkompression und Übertragung für DVB" von Ulrich Reimers, 2. Auflage, Springer-Verlag, 1997, Seite 89-99, ist es bereits bekannt, Audio-, Video- und Zusatzdaten nach dem MPEG-2 Standard zu einem digitalen Datenstrom zusammenzufassen, in welchem die Signaleinheiten der genannten Daten im Multiplex übertragen werden. In diesem Datenstrom werden auch Informationen über das laufende Programm und über den Übertragungsweg sowie über andere, für die technische Durchführung des Dienstes benötigten oder für den Zuschauer als Orientierungshilfe in der Programmvielfalt gedachten Informationen übertragen. Ferner enthält der Datenstrom, in welchem die Daten paketweise übertragen werden, auch in jedem Datenpaket ein Synchronbyte, welches zur wiedergabeseitigen Datenwiedergewinnung verwendet wird. Die Informationen über das laufende Programm werden in Form von Tabellen übertragen. Eine erste dieser Tabellen ist die 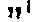 Program Association Table (PAT)", die eine Liste aller im vorliegenden Transport-Multiplex vorhandenen Programme sowie Querverweise auf eine jeweils zugehörige 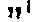 Program Map Table (PMT)" aufweist. Diese wiederum enthält Informationen, die zur Decodierung des jeweiligen Programmes benötigt werden. Zu diesen Informationen gehören unter anderem Kennbits, die eine Kennung für die aktuelle Tabelle, die Länge der Tabelle, eine Kennung für den aktuellen Transportstrom und die Versionsnummer der aktuellen Tabelle darstellen.

Ausgehend von diesem Stand der Technik liegt der Erfindung die Aufgabe zugrunde, ein Verfahren zur Auswertung eines digitalen Datenstroms mit den im Obergriff des Anspruchs 1 angegebenen Merkmalen anzugeben, welches Veränderungen im Datenstrom, insbesondere Veränderungen in den zusätzlich zu den Video- und Audiodaten übertragenen Informationen über das laufende Programm und den Übertragungsweg sowie in anderen Begleitinformationen, schnell und sicher erkennt.

Diese Aufgabe wird durch ein Verfahren mit den in Anspruch 1 angegebenen Merkmalen gelöst. Vorteilhafte Ausgestaltungen und Weiterbildungen des im Anspruch 1 angegebenen Verfahrens sind Gegenstand der abhängigen Ansprüche 2-6. Die Ansprüche 7-10 haben eine Vorrichtung zur Auswertung eines digitalen Datenstroms zum Gegenstand.

Die Vorteile der Erfindung bestehen insbesondere darin, daß beim Erkennen fehlender Übereinstimmung der miteinander verglichenen Kennbits ein Indikatorsignal erzeugt wird, welches der Empfängersteuerschaltung, bei der es sich in der Regel um einen Mikrocomputer handelt, signalisiert, daß eine Veränderung der genannten Kennbits aufgetreten ist. Dieses Indikatorsignal kann dem Mikrocomputer, der zur Empfängersteuerung eine Vielzahl von Aufgaben vornehmen muß, im Sinne eines Interrupt-Signals zugeführt werden, um von der genannten Veränderung in den Kennbits abhängige weitere Aufgaben durchzuführen, beispielsweise aktualisierte Begleitinformationen wie Textsignale in einen Speicher zu übernehmen und/oder anzuzeigen.

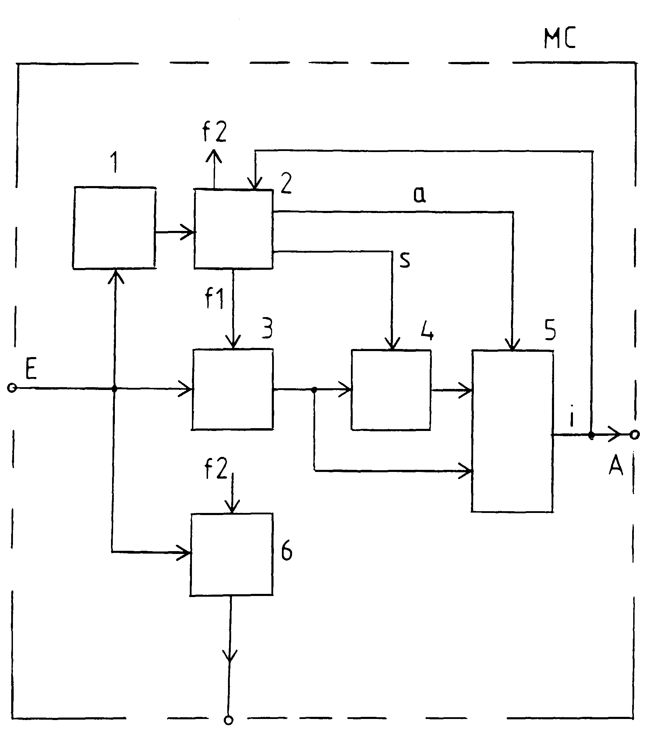

Weiterhin wird mittels der Erfindung erreicht, daß bei schnell wechselnden Versionsnummern übertragener Tabellen nicht nur die nächstfolgende Versionsnummer erkannt wird, sondern auch die übernächste oder jede andere nachfolgende Versionsnummer. Dies bedeutet, daß durch die beanspruchte 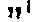 Filterung auf Ungleichheit" auch beim Verpassen einer Versionsnummer nächsthöhere Versionsnummern erkannt und die damit verbundenen weiteren Aufgaben vom Mikrocomputer durchgeführt werden können. Dies wäre bei einer 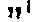 Filterung auf Gleichheit", bei der gezielt nach einer bestimmten, nächsthöheren Versionsnummer gesucht wird, nicht der Fall, wenn diese nächsthöhere Versionsnummer aufgrund des schnell wechselnden Tabelleninhalts bzw. schnell wechselnder Kennbits verpaßt wird. Weitere vorteilhafte Eigenschaften der Erfindung ergeben sich aus der Erläuterung eines Ausführungsbeispiels anhand der Figur.

Diese zeigt ein Blockschaltbild zur Veranschaulichung einer Vorrichtung, mittels der das beanspruchte Verfahren durchführbar ist.

Dem Eingang E der Vorrichtung wird ein nach dem MPEG2-Standard codierter digitaler Datenstrom zugeführt. Dieser Datenstrom weist eine Vielzahl von verschiedenen Unterdatenströmen auf, die jeweils einem Fernsehrundfunkprogramm zugehörige Video-, Audio- und Zusatzdaten enthalten. Weiterhin weist der Datenstrom Unterdatenstöme auf, die Informationen über die Organisation des digitalen Datenstroms enthalten. Die in den Unterdatenströmen übertragenen Signale werden paketweise übertragen, wobei jedes Paket eine Länge von 204 Bytes hat. Dabei dienen 16 Bytes für Fehlerkorrekturzwecke. 188 Bytes werden als Nutzdaten verwendet. Um die Pakete zu erkennen, wird das erste Byte jedes Paketes als Synchronbyte definiert. Es weist entweder den Hexadezimalwert 47 oder den Hexadezimalwert B4 auf. Weiterhin enthält jedes Paket einen Identifikationscode PID, welcher die Zugehörigkeit des Pakets zu einem bestimmten Unterdatenstrom angibt.

Der am Eingang E anliegende Datenstrom wird einem Synchronbytedetektor 1 zugeführt, der die genannten Synchronbytes im Datenstrom erkennt und einer Steuereinheit 2 den Paketstart signalisiert. In der Steuereinheit 2 ist ein Zähler vorgesehen, der zu Beginn jedes Pakets zurückgesetzt wird und in Abhängigkeit von seiner Programmierung an bestimmten Bitpositionen des aktuellen Datenpaketes ein Freigabesignal f1, welches einem Kennbitseparator 3 zugeführt wird, und ein Freigabesignal f2 erzeugt, welches einem Datenseparator 6 zugeführt wird.

Im folgenden wird davon ausgegangen, daß das aktuelle Datenpaket eine Tabelle mit Informationen über die Organisation des digitalen Datenstroms enthält, wobei in dieser Tabelle eine Vielzahl von Kennbitgruppen übertragen wird, die jeweils eine vorgegebene Anzahl von Kennbits aufweisen und innerhalb der Tabelle an vorgegebenen Bitpositionen auftreten.

Eine dieser Kennbitgruppen wird zur Übertragung der Versionsnummer der vorliegenden Tabelle verwendet. Dieser Kennbitgruppe gehören 5 Bits an, beispielsweise das 43. bis 47. Bit der Tabelle, so daß der Tabelle Versionsnummern von 0 bis 31 zugeordnet werden können. Treten in den Begleitdaten zu einem übertragenen Fernsehrundfunkprogramm Veränderungen auf, dann werden diese Veränderungen dadurch signalisiert, daß die Tabelle die nächsthöhere Versionsnummer erhält.

Die Überwachung des am Eingang E anliegenden digitalen Datenstroms auf das Auftreten einer veränderten Versionsnummer geschieht wie folgt:

Nach der Umschaltung eines Fernsehempfängers auf einen neuen Fernsehsender wird im digitalen Datenstrom zunächst nach der Programmtabelle PAT gesucht, die eine Liste aller im vorliegenden Transport-Multiplex vorhandenen Programme in Form von Querverweisen auf eine jeweils zugehörige weitere Tabelle PMT aufweist. Ist durch einen Vergleich der in einem Senderspeicher des Empfängers abgespeicherten Senderidentifikationsinformation mit der in der übertragenen Programmtabelle enthaltenen Senderidentifikationsinformation PID der gewünschte Sender ermittelt, dann wird unter Verwendung der zugehörigen Querverweise im Datenstrom nach der zugehörigen weiteren Tabelle PMT gesucht, die zur Decodierung der Video- und Audiodaten notwendige Zusatzinformationen enthält. Mittels der dann vorliegenden Informationen kann die Decodierung und Wiedergabe des vorliegenden Fernsehprogramms mittels des Empfängers erfolgen.

Beim erstmaligen Auffinden der jeweils gewünschten Tabelle wird nach der Abtrennung des Synchronbytes im Synchronbyteseparator 1 in der Steuereinheit 2 ein Zähler gestartet, der für das Zeitintervall, in dem das 43. bis 47. Bit der Tabelle auftreten, ein Freigabesignal f1 für den Kennbitseparator 3 erzeugt. Dieser wird durch das genannte Freigabesignal f1 für das genannte 43. bis 47. Bit durchlässig. Weiterhin erzeugt die Steuereinheit 2 während dieses Zeitintervalls Adressiersignale s für den Kennbitspeicher 4, so daß die genannten Kennbits dort zwischengespeichert werden. Der Vergleicher 5 ist während dieses Zeitintervalls deaktiviert.

Beim nächsten Auffinden der genannten Tabelle im Datenstrom wird wiederum nach der Abtrennung des Synchronbytes im Synchronsignalseparator 1 in der Steuereinheit 2 der Zähler gestartet, der für das Zeitintervall, in dem das 43. bis 47. Bit der Tabelle auftreten, ein Freigabesignal f1 für den Kennbitseparator 3 erzeugt. Dieser wird wiederum durch das genannte Freigabesignal f1 für das 43. bis 47. Bit durchlässig. Weiterhin erzeugt die Steuereinheit 2 während dieses Zeitintervalls Adressiersignale s für den Kennbitspeicher 4, so daß die dort bereits abgespeicherten Kennbits ausgelesen und an den ersten Eingang des Vergleichers 5 geführt werden. Dem zweiten Eingang des Vergleichers 5 werden die Ausgangssignale des Kennbitseparators 3 zugeführt. Im Vergleicher 5, dem von der Steuereinheit 2 ein Aktivierungssignal a zugeführt wird, erfolgt ein bitweiser Vergleich der genannten Bitgruppen.

Ergibt dieser Vergleich, daß die beiden Bitgruppen übereinstimmen, dann wird am Ausgang des Vergleichers 5 kein Indikatorsignal i erzeugt. Statt dessen wird im digitalen Datenstrom, der am Eingang E anliegt, nach dem nächsten Auftreten der genannten Tabelle gesucht.

Ist diese gefunden, dann wird wiederum nach der Abtrennung des Synchronbytes im Synchronsignalseparator 1 in der Steuereinheit 2 und unter der Berücksichtigung eines eventuell vorhandenen Offsets, Adaptionsfield und Pointerfield, der Zähler gestartet, der für das Zeitintervall, in dem das 43. bis 47. Bit der Tabelle auftreten, ein Freigabesignal f1 für den Kennbitseparator 3 erzeugt. Dieser wird wiederum durch das genannte Freigabesignal f1 für das 43. bis 47. Bit durchlässig. Weiterhin erzeugt die Steuereinheit 2 während dieses Zeitintervalls Adressiersignale s für den Kennbitspeicher 4, so daß die dort bereits abgespeicherten Kennbits ausgelesen und an den ersten Eingang des Vergleichers 5 geführt werden. Dem zweiten Eingang des Vergleichers 5 werden die Ausgangssignale des Kennbitseparators 3 zugeführt.

Im Vergleicher 5, dem von der Steuereinheit 2 ein Aktivierungssignal a zugeführt wird, erfolgt ein bitweiser Vergleich der genannten Bitgruppen.

Ergibt dieser Vergleich, daß die beiden Bitgruppen übereinstimmen, dann wird am Ausgang des Vergleichers 5 kein Indikatorsignal i erzeugt. Statt dessen wird im digitalen Datenstrom, der am Eingang E anliegt, nach dem nächsten Auftreten der genannten Tabelle gesucht.

Ergibt der genannte Vergleich hingegen, daß die beiden Bitgruppen nicht miteinander übereinstimmen, wird am Ausgang des Vergleichers 5 ein Indikatorsignal i erzeugt, welches die Ungleichheit der miteinander verglichenen Kennbits signalisiert. Dieses Indikatorsignal wird dann am Ausgang A der gezeigten Vorrichtung zur Verfügung gestellt. Weiterhin wird das Indikatorsignal der Steuereinheit 2 zugeführt.

Diese erzeugt dann nach dem Erkennen von weiteren Datenpaketen im Datenstrom, welche geänderte Informationen enthalten, ein zweites Freigabesignal f2. Dieses zweite Freigabesignal f2 wird einem Datenseparator 6 zugeführt, an dessen Eingang der digitale Datenstrom anliegt. Der Datenseparator 6 stellt an seinem Ausgang digitale Signale zur Verfügung, die Zusatzinformationen bezüglich des empfangenen Fernsehrundfunkprogrammes enthalten, die sich seit ihrem letzten Empfang verändert haben, wobei diese Veränderung - wie es oben beschrieben wurde - durch eine Veränderung der Versionsnummer einer Tabelle signalisiert wurde.

Diese Zusatzinformationen sind beispielsweise Informationen über den Sendezustand der momentan empfangenen Sendung, beispielsweise 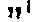 Sendung läuft nicht", 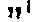 Sendung ist unterbrochen", 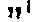 Sendung läuft", 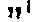 Sendung beginnt in wenigen Sekunden", usw..

Folglich können gemäß der Erfindung Änderungen in Zusatzinformationen zu einer Sendung durch die Aufnahme einer neuen Versionsnummer in eine im Datenstrom übertragene Tabelle gekennzeichnet werden. Diese Veränderung der Versionsnummer wird empfangsseitig erkannt und signalisiert. Daraufhin können im Datenstrom diejenigen Datenpakete gesucht und ausgewertet werden, die die veränderten Zusatzinformationen zu einer Sendung enthalten, und gegebenenfalls notwendige Verarbeitungsschritte im Empfänger durchgeführt werden. Solange keine Änderungen bezüglich der Versionsnummer der Tabelle auftreten, sind die Steuerschaltungen des Empfängers entlastet, so daß andere von ihnen wahrzunehmende Aufgaben schneller durchgeführt werden können.

Wie in der Figur durch den Schaltungsblock MC angedeutet ist, kann die dargestellte Vorrichtung auch durch einen Mikrocomputer realisiert sein, der zur Durchführung des beschriebenen Verfahrens in geeigneter Weise programmiert ist.

Das vorstehend beschriebene Prinzip einer 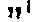 Filterung auf Ungleichheit" kann nicht nur in Zusammenhang mit der Versionsnummer einer Tabelle vorteilhaft eingesetzt werden. Beispielsweise wird in den genannten Tabellen auch eine Kennbitgruppe übertragen, die Kennbits zum Beispiel für den Transportstrom oder die Programmnummer enthalten. Setzt man einen Softwareprozeß oder ein festes Hardwarefilter gezielt auf die Suche nach der Programmtabelle PAT an, die in jedem Transportstrom vorhanden ist, so kann man ein Filter verwenden, das sowohl eine Ungleichheit der Versionsnummer der Tabelle als auch eine Ungleichheit in den Kennbits für den Transportstrom erkennt. Wird nun der physikalische Empfangskanal auf einen neuen Kanal umgeschaltet, so existiert auch dort wieder eine Programmtabelle PAT, die mit hoher Wahrscheinlichkeit eine andere Versionsnummer und andere Kennbits für den Transportstrom aufweist. Dadurch kann eine Änderung der Kanaldaten äußerst schnell erkannt werden. In herkömmlichen Systemen müßte man vor einer Kanaländerung gegebenenfalls das Filter abschalten und nach der Abstimmung auf den neuen Kanal das Filter zur Suche nach einer neuen Programmtabelle PAT freigeben. Dieser Zeitverzug kann bei Verwendung der beschriebenen 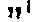 Filterung auf Ungleichheit" vermieden werden. Dies bedeutet mit anderen Worten, daß mittels des beanspruchten Verfahrens auch Senderwechsel in sehr kurzer Zeit erkannt werden können, wobei gleichzeitig eine Aktualisierung der zugehörigen Sendergrunddaten bzw. der Programmtabelle PAT erfolgt.

Das oben beschriebene Verfahren kann nicht nur bei einer Übertragung MPEG-codierter Rundfunksignale verwendet werden, sondern auch überall dort eingesetzt werden, wo im Multipex mit digitalen Nutzdaten zeitveränderliche Zusatzdaten übertragen werden, die weitere Informationen über die Nutzdaten und deren Übertragung oder auch andere, nutzdatenunabhängige Zusatzinformationen enthalten.

## Patentansprüche

1. Verfahren zur Auswertung eines digitalen Datenstroms, in welchem die Daten paketweise übertragen werden, jedes Paket ein Synchronbyte aufweist und in den Paketen Bitpositionen vorgegeben sind, an denen Kennbits übertragen werden,
**dadurch gekennzeichnet, daß**
- die an den vorgegebenen Bitpositionen eines ersten Paketes übertragenen Kennbits aus dem Datenstrom separiert und zwischengespeichert werden,
- die an den vorgegebenen Bitpositionen eines nachfolgenden Paketes übertragenen Kennbits aus dem Datenstrom separiert und mit den zwischengespeicherten Kennbits verglichen werden,
- beim Erkennen einer Übereinstimmung der miteinander verglichenen Kennbits die an den vorgegebenen Bitpositionen eines weiteren nachfolgenden Paketes übertragenen Kennbits aus dem Datenstrom separiert und mit den zwischengespeicherten Kennbits verglichen werden und
- beim Erkennen fehlender Übereinstimmung der miteinander verglichenen Kennbits ein Indikatorsignal erzeugt wird, welches die Ungleichheit der miteinander verglichenen Kennbits signalisiert.

2. Verfahren nach Anspruch 1,
**dadurch gekennzeichnet, daß**
der digitale Datenstrom eine Vielzahl von Unterdatenströmen aufweist, in denen jeweils einem Rundfunkprogramm zugehörige Daten übertragen werden.

3. Verfahren nach Anspruch 1 oder 2,
**dadurch gekennzeichnet, daß**
das Rundfunkprogramm ein Fernsehrundfunkprogramm ist und die zugehörigen Daten dem Fernsehrundfunkprogramm zugehörige Video-, Audio- und Zusatzdaten sind, jedem Unterdatenstrom eine Vielzahl von Paketen zugeordnet ist, daß die verschiedenen Unterdatenströmen zugeordneten Pakete im Zeitmultiplex miteinander verschachtelt übertragen werden und daß jedes Paket einen Identifikationscode aufweist, welcher die Zugehörigkeit des Pakets zu einem der Unterdatenströme angibt.

4. Verfahren nach einem der vorhergehenden Ansprüche,
**dadurch gekennzeichnet, daß**
der digitale Datenstrom Unterdatenströme aufweist, die Informationen über die Organisation des digitalen Datenstroms enthalten, die Informationen über die Organisation des digitalen Datenstroms tabellenförmig aufgebaut sind, und innerhalb einer Tabelle eine Vielzahl von Kennbitgruppen übertragen wird, die jeweils eine vorgegebene Anzahl von Kennbits aufweisen und die Tabellen Hinweise auf rundfunkprogrammabhängige Aktualisierungen enthalten.

5. Verfahren nach Anspruch 4,
**dadurch gekennzeichnet, daß**
eine Kennbitgruppe Kennbits aufweist, die die Versionsnummer einer Tabelle angeben, und das Indikatorsignal erzeugt wird, wenn der Vergleich der zwischengespeicherten Kennbits mit separierten Kennbits eines nachfolgenden Paketes eine fehlende Übereinstimmung ergibt und damit eine Veränderung der Versionsnummer anzeigt.

6. Verfahren nach einem der vorhergehenden Ansprüche,
**dadurch gekennzeichnet, daß**
eine Kennbitgruppe eine Kennung für den aktuellen Transportstrom aufweist und ein Indikatorsignal erzeugt wird, wenn der Vergleich von zwischengespeicherten Kennbits mit separierten Kennbits eines nachfolgenden Paketes eine fehlende Übereinstimmung ergibt und damit eine Veränderung der Kennung für den aktuellen Transportstrom anzeigt und der digitale Datenstrom ein MPEG-Datenstrom ist oder der digitale Datenstrom ein DVD-Datenstrom ist.

7. Vorrichtung zur Auswertung eines digitalen Datenstroms, in welchem die Daten paketweise übertragen werden, jedes Paket ein Synchronbyte aufweist und in den Paketen Bitpositionen vorgegeben sind, an denen Kennbits übertragen werden, welche Vorrichtung aufweist:
- einen Synchronbyteseparator (1) zur Abtrennung des Synchronbytes aus dem digitalen Datenstrom,
- eine mit dem Synchronbyteseparator verbundene Steuereinheit (2) zur Erzeugung eines ersten Freigabesignals (f1) für einen Kennbitseparator (3) und von Speicheradressiersignalen (s),
- einen mit den Speicheradressiersignalen beaufschlagten Kennbitspeicher (4), der an den Ausgang des Kennbitseparators (3) angeschlossen ist, und
- einen Vergleicher (5), dessem ersten Eingang die Ausgangssignale des Kennbitspeichers (4) und dessem zweiten Eingang die Ausgangssignale des Kennbitseparators (3) zugeführt sind und welcher an seinem Ausgang ein Indikatorsignal (i) zur Verfügung stellt, wenn sich die Ausgangssignale des Kennbitspeichers von den Ausgangssignalen des Kennbitseparators unterscheiden.

8. Vorrichtung nach Anspruch 7,
**dadurch gekennzeichnet, daß**
der Ausgang des Vergleichers (5) mit einem Eingang der Steuereinheit (2) verbunden ist und die Steuereinheit (2) einen Zähler aufweist.

9. Vorrichtung nach einem der Ansprüche 7 oder 8,
**dadurch gekennzeichnet, daß**
die Steuereinheit (2) zur Erzeugung eines zweiten Freigabesignals (f2) für einen Datenseparator (6) vorgesehen ist.

10. Vorrichtung nach einem der Ansprüche 7 bis 9,
**dadurch gekennzeichnet, daß**
sie durch einen Mikrocomputer (MC) realisiert ist.
